# EUROPÄISCHE PATENTANMELDUNG

(11) **EP 1 437 244 A2**
(43) Veröffentlichungstag der Anmeldung: **14.07.2004**
(21) Anmeldenummer: 03027358.5
(22) Anmeldetag: 27.11.2003
(51) Int. Cl.: B60H 1/32

(54) **Verfahren zum Betreiben eines Klimakompressors eines Kühlmittelkreislaufs eines Kraftfahrzeugs**

(30) Priorität: 10.01.2003 DE 10300571
(71) Anmelder: DaimlerChrysler AG, 70567 Stuttgart (DE)
(72) Erfinder: Dunz, Roland, 71665 Vaihingen (DE); Granse, Karsten, 75378 Bad Liebenzell (DE); Vinnemann, Thomas, 70184 Stuttgart (DE)

(57) **Zusammenfassung**

Die Erfindung betrifft ein Verfahren zum Betreiben eines Klimakompressors eines Kühlmittelkreislaufs in einem von einem Verbrennungsmotor angetriebenen Kraftfahrzeug, wobei ein maximales Moment (Mkompmax) für den Klimakompressor ermittelt wird, und für die Ermittlung des maximalen Moments ein Istmoment (Mmotist) des Verbrennungsmotors mit einem Grenzmoment des Verbrennungsmotors unter Bildung einer Vergleichsgröße verglichen wird, und das maximale Moment (Mkompmax) für den Klimakompressor in Abhängigkeit von der Vergleichsgröße bestimmt wird.

## Beschreibung

Die Erfindung betrifft ein Verfahren zum Betreiben eines Klimakompressors eines Kühlmittelkreislaufs in einem von einem Verbrennungsmotor angetriebenen Kraftfahrzeug.

Aus der Offenlegungsschrift DE 199 60 079 A1 ist ein Steuergerät, beispielsweise ein Motor- oder ein Bordnetzsteuergerät bekannt, welches ein Energiemanagement durchführt. Im Zuge dieses Energiemanagements werden zugehörige Verbraucher gemäß im Steuergerät ermittelter Kriterien zu- bzw. abgeschaltet. Ein solcher Verbraucher ist beispielsweise ein Klimakompressor, der sowohl in seiner elektrischen Wirkung als Stromverbraucher als auch als mechanischer Verbraucher schaltbar ist und beispielsweise in einer Beschleunigungsphase abgeschaltet wird, um eine bremsende Wirkung auszuschalten.

Aus der Offenlegungsschrift DE 101 06 243 A1 ist ein Verfahren zur Regelung eines Kompressors eines Kühlmittelkreislaufs einer Klimaanlage eines Kraftfahrzeuges bekannt, bei dem das momentane Lastdrehmoment des Kompressors bestimmt und mit einem vorgegebenen, maximalen Grenzdrehmoment für den Kompressor verglichen wird, und der Kompressor in Abhängigkeit eines daraus resultierenden Vergleichswertes angesteuert wird. Dabei wird das momentane Lastdrehmoment des Kompressors als Funktion von bestimmten Variabeln, beispielsweise eines Kältemittelhochdrucks, dargestellt und es wird anhand einer zu dieser Funktion gehörenden Umkehrfunktion in Abhängigkeit des von einer Motorsteuerung vorgegebenen Grenzdrehmoments für den Kompressor ein Ansteuersignal für den Kompressor ermittelt. Das in der Offenlegungsschrift DE 101 06 243 A1 beschriebene Verfahren beschäftigt sich mit einer Beschreibung des Kompressors bzw. seines Lastdrehmoments mittels klimakompressor- bzw. klimaanlagenspezifischer Größen wie beispielsweise einer Kompressordrehzahl, einem Kältemittelhochdruck, einer Spannung eines Verdampfergebläses der Klimaanlage. Verbrennungsmotorspezifische bzw. kraftfahrzeugspezifische Größen bleiben dagegen unberücksichtigt.

Es ist Aufgabe der Erfindung ein Verfahren zum Betreiben eines Klimakompressors in einem verbrennungsmotorisch angetriebenen Kraftfahrzeug bereit zu stellen.

Diese Aufgabe wird durch die Merkmale des Patentanspruchs1 gelöst.

Bei dem erfindungsgemäßen Verfahren wird ein maximales Moment für den Klimakompressor ermittelt. Für die Ermittlung dieses maximalen Moments wird ein Ist-Moment des Verbrennungsmotors mit einem Grenz-Moment des Verbrennungsmotors unter Bildung einer Vergleichsgröße verglichen. Das maximale Moment für den Klimakompressor wird in Abhängigkeit von der Vergleichsgröße bestimmt. Das Ist-Moment des Klimakompressors überscheitet vorzugsweise für eine vorgegebene Zeit dieses maximale Moment für den Klimakompressor nicht.

Mittels des erfindungsgemäßen Verfahren kann in bestimmten Fahrsituationen, in denen der Antriebsmotor bzw. der Verbrennungsmotor eine relativ hohe Leistung erbringen muss, beispielsweise bei Fahrten in großer Höhe oder bei starken Beschleunigungsvorgängen, die Leistungsabgabe an den Klimakompressor eines Kühlmittelkreislauf einer Klimaanlage begrenzt werden. Die Begrenzung erfolgt dergestalt, dass die Kompressorleistung auf ein zulässiges Maß reduziert wird, wobei bei der Bestimmung dieses Maßes Motorbetriebsgrößen bzw. Fahrzeugbetriebsgrößen wie ein Ist-Moments des Verbrennungsmotors und ein Grenzmoment des Verbrennungsmotors berücksichtigt werden. Die Leistungsreduzierung erfolgt durch Ermittlung eines maximallen Moments für den Klimakompressor, welches nicht überschritten werden darf.

Es werden Komfortverbesserungen insbesondere durch eine Vermeidung bzw. eine Reduzierung von Kompressor-Einschalt- bzw. Abschaltvorgängen erzielt. Ebenso wird die Funktionsweise des Verbrennungsmotors, insbesondere Rundlauf- bzw. Leerlaufeigenschaften, verbessert. Die verbesserte Koordination bzw. Abstimmung von maximalem Kompressormoment und Verbrennungsmotormoment ermöglicht außerdem eine Reduzierung von Kraftstoffverbrauch und Abgasemissionen.

In Ausgestaltung der Erfindung überschreitet ein Ist-Moment des Klimakompressors bei einem Beschleunigungs-/Anfahrvorgang das ermittelte maximale Moment des Klimakompressors nicht, wenn ein Gaspedalwert einen vorgegebenen Grenzwert überschreitet und vorzugsweise zusätzlich eine Drehzahl des Verbrennungsmotors einen weiteren vorgegebenen Grenzwert unterschreitet.

In weiterer Ausgestaltung der Erfindung überschreitet ein Ist-Moment des Klimakompressors das maximale Moment des Klimakompressors nicht, wenn ein Leerlaufmoment des Verbrennungsmotors einen vorgegebenen Grenzwert überschreitet und vorzugsweise zusätzlich eine Drehzahl des Verbrennungsmotors einen weiteren vorgegebenen Grenzwert unterschreitet.

Durch die Ermittlung eines maximalen Moments für den Klimakompressor und die damit einhergehende Begrenzung der Kompressorleistung kann vorteilhafterweise zusätzliche Leistung zum Beschleunigen/Anfahren des Kraftfahrzeugs freigesetzt bzw. bereitgestellt werden. Ein unbeabsichtigtes Zumstillstandbringen des Verbrennungsmotors bzw. ein Abwürgen des Verbrennungsmotors (sog. Motorabwürgen) kann durch das erfindungsgemäße Verfahren vorteilhafterweise verhindert werden.

Von einem in dem Kraftfahrzeug vorgesehenen beziehungsweise dem Verbrennungsmotor zugeordneten Steuergerät kann dank des erfindungsgemäßen Verfahrens permanent eine optimale Drehmomentvorgabe insbesondere von einem Energiemanagement bzw. Motormanagement des Steuergeräts an den Klimakompressor bzw. an diesen zugeordnete Klimakompressoransteuergeräte gesendet werden und somit der Klimakompressor optimiert bzw. optimal betrieben bzw. angesteuert werden. Es ergibt sich somit eine optimale Momentenabstimmung zwischen dem Steuergerät, welches dem Verbrennungsmotor bzw. Kraftfahrzeug zugeordnet ist, und der Klimaanlage/dem Klimakompressor.

Die Vorgabe des optimalen maximalen Moments des Klimakompressor durch ein Steuergerät, welches dem Verbrennungsmotor/Fahrzeug zugeordnet ist, führt dazu, dass in einem ggf. vorgesehenen Klimakompressor-Ansteuergerät auf die Hinterlegung entsprechender Kennlinien verzichtet werden kann. Eine Einbindung der Ermittelung des maximalen Moments für den Klimakompressor in einen Momentenkoordinator bzw. in eine Momentenkompensation, wie sie beispielsweise von einem Energiemanagementsystem betrieben werden kann, ist möglich.

Anstelle eines maximalen Drehmoments für Klimakompressor kann selbstverständlich auch ein Sollmoment für den Klimakompressor ermittelt werden. Anstelle der Größe "Moment" kann sich die Erfindung auch auf die Größe "Leistung" beziehen. Die Erfindung gilt dann für die Größe der "Leistung" entsprechend. Anstelle eines maximalen Drehmoments für den Klimakompressor ist dann eine maximale Leistung des Klimakompressors zu setzen.

Bei dem Netzwerk, welches u.a. der Verbindung von Steuergeräten und von diesen angesteuerten Komponenten und diesen zugeordneten Messeinheiten dient, handelt es sich vorzugsweise um ein sog. CAN-Bus-Netzwerk. Alternativen bzw. Zusätze in Form von beispielsweise optischen Netzwerken sind möglich.

Weitere vorteilhafte Ausgestaltungen der Erfindung ergeben sich aus den Unteransprüchen und den anhand der Zeichnung nachfolgen dargestellten Ausführungsbeispielen. Hierbei zeigen:
- Fig. 1: eine schematische Darstellung einer erfindungsgemäßen Ermittlung eines maximalen Moments für einen Klimakompressor,
- Fig. 2: eine grafische Darstellung einer Abschaltkennlinie für einen Kompressor bei einer Aussentemperatur von mindestens 25°C und
- Fig. 3: eine grafische Darstellung einer Abschaltkennlinie für einen Klimakompressor bei einer Aussentemperatur von weniger als 25°C.

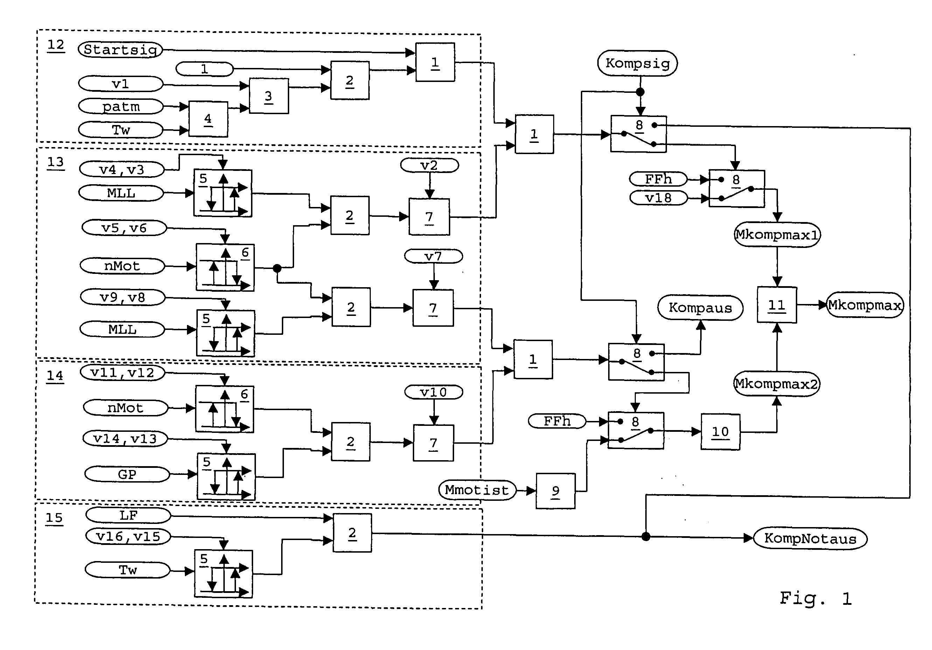

Fig. 1 zeigt eine schematische Darstellung einer Ermittlung eines maximalen Moments Mkompmax für den Klimakompressor.

Die Funktionsblöcke 1 entsprechen Oder-Verknüpfungen. Die Funktionsblöcke 2 entsprechen Und-Verknüpfungen.

In den Funktionsblöcken 5 und 6 wird in Abhängigkeit davon, ob einer Eingangsgröße bestimmte Grenz- bzw. Schwellwerte über- bzw. unterschreitet, eine Ausgangsgröße gesetzt oder nicht gesetzt bzw. einer Ausgangsgröße vorzugsweise ein Wert x (bevorzugterweise "1") oder ein Wert 0 zugeordnet. In den Funktionsblöcken 5 wird das Ausgangssignal gesetzt, wenn die jeweilige Eingangsgröße einen zweiten Grenzwert überschreitet. Die Ausgangsgröße wird zurückgesetzt, wenn die jeweilige Eingangsgröße einen ersten Grenzwert unterschreitet. In den Funktionsblöcken 6 wird die Ausgangsgröße gesetzt, wenn die jeweilige Eingangsgröße einen ersten Grenzwert unterschreitet und die Ausgangsgröße wird zurückgesetzt, wenn die jeweilige Eingangsgröße einen zweiten Grenzwert überschreitet. Der zweite Grenzwert ist in den Funktionsblöcken 5 und 6 vorzugsweise vom Wert her höher als der erste Grenzwert. Der in den Funktionsblöcken 5 und 6 stattfindende Grenzwertvergleich ist also Hysterese behaftet. Die Grenz- bzw. Schwellwerte in den Funktionsblöcken 5 und 6 können variabel und frei applizierbar sein. Der Einfluss der ersten und zweiten Grenzwerte auf die Funktionsblöcke 5 und 6 ist in der Fig. 1 durch einen Pfeil dargestellt, welcher von oben auf die jeweiligen Funktionsblöcke 5 und 6 auftrifft. Am anderen Ende dieses Pfeils ist ein Oval gezeigt, welches von links nach rechts den ersten und den zweiten Grenzwert beinhaltet.

Die Funktionsblöcke 7 sind Verzögerungsglieder und bei den Funktionsblöcken 8 handelt es sich um Schaltelemente. Die Zeitverzögerungen der Funktionsblöcke 7 sind ebenfalls in Abhängigkeit von entsprechenden Variabeln veränderbar und frei applizierbar.

Bei der Ermittlung des maximalen Kompressormoments Mkompmax können verschiedene Betriebsbedingungen beziehungsweise Betriebszustände berücksichtigt werden. So wird bevorzugterweise mittels eines Funktionsblocks 12 der Betriebszustand des Motorstarts berücksichtigt. Durch einen Funktionsblock 13 wird der Betriebszustand des Abwürgens des Verbrennungsmotors berücksichtigt. In einem Funktionsblock 14 findet ein Anfahr/Beschleunigungsvorgang Berücksichtigung und in einem Funktionsblock 15 werden eventuell auftretende Fehler in der Klimaanlage beachtet.

Für den Startvorgang des Verbrennungsmotors wird in einem Funktionsblock 4, welcher vorzugsweise ein Kennfeld, eine Tabelle und/oder ein Modell ist, bevorzugterweise aus einer Kühlwassertemperatur Tw und/oder einem Atmosphärendruck patm eine nicht näher bezeichnete Ausgangsgröße des Funktionsblocks 4 ermittelt, welche von der Dimension her bevorzugterweise einer Zeit entspricht. In einem Funktionsblock 3 wird vorzugsweise verglichen, ob die Ausgangsgröße der Fig. 4 größer ist, als die durch die Variable v1 vorgegebene Zeit nach dem Start, nach der der Klimakompressor normalerweise eingeschaltet werden soll. Ist dies der Fall, so wird die Ausgangsgröße des Funktionsblocks 3 gesetzt und somit ist auch die Ausgangsgröße der einzigen Und-Verknüpfung 2 des Funktionsblocks 12 gesetzt, da die weitere Eingangsgröße des Funktionsblock 2 vorzugsweise permanent gesetzt ist und bevorzugterweise einer "Eins" entspricht. Liegt nun ein Startvorgang vor, d.h. das Startsignal Startsig ist gesetzt, so ist auch die Ausgangsgröße der einzigen Oder-Verknüpfung 1 des Funktionsblocks 12 gesetzt.

Es ist vorzugsweise ein Kompressorsignal Kompsig vorgesehen, durch welches ein Klimakompressor signalisieren kann, dass er bzw. seine ggf. vorgesehene Ansteuereinheit eine Momentvorgabe, insbesondere in Form eines maximalen Kompressormoments verarbeiten kann. Das Kompressorsignal Kompsig kann alternativ auch durch Setzten eines entsprechenden Applikationsschalters für die Kompressorschnittstelle gesetzt werden. Ist das Kompressorsignal Kompsig gesetzt, so wird bei gesetztem Ausgangssignal des Funktionsblocks 12 vorzugsweise über zwei Schaltelemente 8 einem maximalen Drehmoment für den Klimakompressor Mkompmax 1 ein vorgegebener Wert v18 zugewiesen, welcher einem maximalen Kompressormoment beim Motorstart entsprechen soll. Der Wert der Variablen v18 ist vorzugsweise 0, was zu einem Abschalten des Klimakompressors führt.

Dadurch, dass eine zu frühe Aufschaltung des Klimakompressors und somit einer zusätzlichen Last vermieden wird, kommt es zu einer Verbessung des Startvorgangs.

Alternativ kann bei nicht gesetztem Kompressorsignal Kompsig, welches beispielsweise nicht gesetzt ist, wenn der vorgesehene Klimakompressor bzw. seine Ansteuereinheit keine maximale Momentenvorgaben verarbeiten kann, durch entsprechende Umschaltung der Schaltelemente 8 dem maximalen Drehmoment Mkompmax für den Klimakompressor ein Defaultwert FFh zugewiesen und der Klimakompressor mittels eines Notaussignals KompNotaus ausgeschaltet werden.

Besteht eine Gefahr des Motorabwürgens so werden bevorzugterweise ein momentanes Leerlaufmoment MLL und vorzugsweise zusätzlich eine momentane Verbrennungsmotordrehzahl nMot ausgewertet. Die Auswertung geschieht vorzugsweise durch Grenzwertvergleich und ein entsprechendes maximales Kompressormoment wird ermittelt, wenn die jeweiligen Grenzwerte über bzw. unterschritten werden. Überschreitet das Leerlaufmoment MLL des Verbrennungsmotors einen Grenzwert v8 und unterschreitet die Motordrehzahl nMot einen Grenzwert v5 (mittlerer und unterer nicht näher bezeichneter Signalzweig des Funktionsblocks 13), so wird vorzugsweise das Ausgangssignal des Funktionsblocks 13, welches dem unteren Signalzweig im Funktionsblock 13 entspricht, gesetzt.

Ist zusätzlich das Kompressorsignal Kompsig gesetzt, d.h. kann der Klimakompressor bzw. seine Ansteuereinheit eine maximale Momentenvorgabe verarbeiten, so wird das maximale Kompressormoment Mkompmax2 mittels eine Vergleichs eines Ist-Moments Mmotist des Verbrennungsmotors mit einem Grenzwert des Verbrennungsmotors ermittelt. Hierzu wird in einem Funktionsblock 9 eine Vergleichsgröße gebildet. Diese Vergleichsgröße kann beispielsweise das Verhältnis von Grenzmoment bzw. maximal möglichem Motormoment zu momentanem Ist-Moment des Verbrennungsmotors sein. Die Vergleichsgröße kann auch die Differenz zwischen diesen beiden Größen sein. Aus dieser Vergleichsgröße wird in dem Funktionsblock 9 ein maximaler Drehmomentwert gebildet, welcher in einem Funktionsblock 10 unter Bildung des maximalen Motormoments Mkompmax2 gefiltert wird. Zur Filterung kann ein sog. PTx-Glied, vorzugsweise ein sog. PT1-Glied, eingesetzt werden.

Ist das Kompressorsignal Kompsig nicht gesetzt, so kann dem maximalen Mkompmax2 ein Defaultwert FFh durch entsprechende Stellung des zugehörigen Schalters 8 zugewiesen werden. Weiterhin wird ein Kompressorsignal Kompaus erzeugt, welches im weiteren Verlauf des Textes erläutert wird.

Unterschreitet das Leerlaufmoment MLL einen Schwellwert v9, so wird die durch die Vorgabe des maximalen Drehmoment Mkompmax2 hervorgerufene Leistungsreduktion des Klimakompressors nach einer Gefahr des Motorabwürgens vorzugsweise wieder aufgehoben. Ebenso wird die Leistungsreduktion des Kompressors vorzugsweise wieder aufgehoben, wenn die Motordrehzahl nMot einen Grenzwert v6 überschritten hat. Die Aufhebung der Leistungsreduktion geschieht bevorzugterweise zeitverzögert (Funktionsblock 7 im unteren, nicht näher bezeichneten Signalzweig des Funktionsblocks 13), wobei die Zeitverzögerung durch eine Variable v7 vorgegeben wird.

Ist eine durch die Vorgabe des maximalen Moments Mkompmax2 hervorgerufene Leistungsreduktion des Kompressors noch nicht groß genug um ein Abwürgen des Motors zu verhindern, so erfolgt vorzugsweise eine Abschaltung des Klimakompressors. Diese Abschaltung wird mittels des ersten und des zweiten nicht näher bezeichneten Signalzweiges des Funktionsblocks 13 bewirkt. Besteht eine Gefahr des Motorabwürgens und überschreitet das Leerlaufmoment MLL des Verbrennungsmotors eine Ausschaltschwelle v3 und unterschreitet vorzugsweise die Motordrehzahl nMot einen Drehzahlgrenzwert v5, so kann hierzu ein entsprechendes Ausgangssignal (oberer, nicht näher bezeichneter Signalzweig im Funktionsblock 13) gesetzt werden. Bei gesetztem Kompressorsignal Kompsig kann dann dem maximalen Kompressormoment Mkompmax1 der Wert der Variablen v18 zugewiesen. Der Wert der Variablen v18 ist vorzugsweise 0, was zu einem Abschalten des Klimakompressors führt. Ist das Kompressorsignal Kompsig nicht gesetzt, so wird vorzugsweise dem maximalen Drehmoment Mkompmax1 der Defaultwert FFh zugewiesen und der Klimakompressor wird mittels des Signals KompNotaus ausgeschaltet.

Unterschreitet das Leerlaufmoment einen Wiedereinschaltschwellwert v4 oder überschreitet die Motordrehzahl den Grenzwert v6, so erfolgt vorzugsweise eine (Wieder-)Einschaltung des Klimakompressors. Diese Einschaltung kann zeitverzögert erfolgen (siehe Funktionsblock 7 im oberen, nicht näher bezeichneten Signalzweig des Funktionsblocks 13), wobei die Länge der Zeitverzögerung über eine Variable v2 vorgegeben werden kann.

Die Grenzwerte v3, v4, v8 und v9 für das Leerlaufmoment MLL sind vorzugsweise von einem nicht näher bezeichneten maximal möglichen Ist-Moment des Verbrennungsmotor abhängig.

Beim Anfahren/Beschleunigen werden vorzugsweise ein Gaspedalwert GP, beispielsweise eine Gaspedalstellung und/oder eine Veränderungsgeschwindigkeit der Gaspedalstellung und/oder eine Beschleunigung des Gaspedals, und/oder die Verbrennungsmotordrehzahl nMot ausgewertet. Siehe hierzu Funktionsblock 14. Überschreitet der Gaspedalwert GP einen Schwellwert v13 und unterschreitet die Motordrehzahl nMot einen Grenzwert v11, so wird vorzugsweise das Ausgangssignal des Funktionsblock 14 gesetzt. Ist ebenfalls das Kompressorsignal Kompsig gesetzt, so bestimmt sich das maximale Motormoment Mkompmax2, wie oben beschrieben, als vorzugsweise gefilterte Größe aus einer Vergleichsgröße, welche bei einem Vergleich von Motor-Ist-Moment Mmotist und Grenzmoment des Verbrennungsmotors ermittelt wird.

Ist das Kompressorsignal Kompsig nicht gesetzt, d.h. es ist kein Klimakompressor bzw. keine Kompressoransteuereinheit vorhanden, der bzw. die eine maximale Motormomentvorgabe verarbeiten kann, so wird dem maximalen Motormoment Mkompmax2 vorzugsweise der Defaultwert FFh zugewiesen und das Signal Kompaus wird gesetzt.

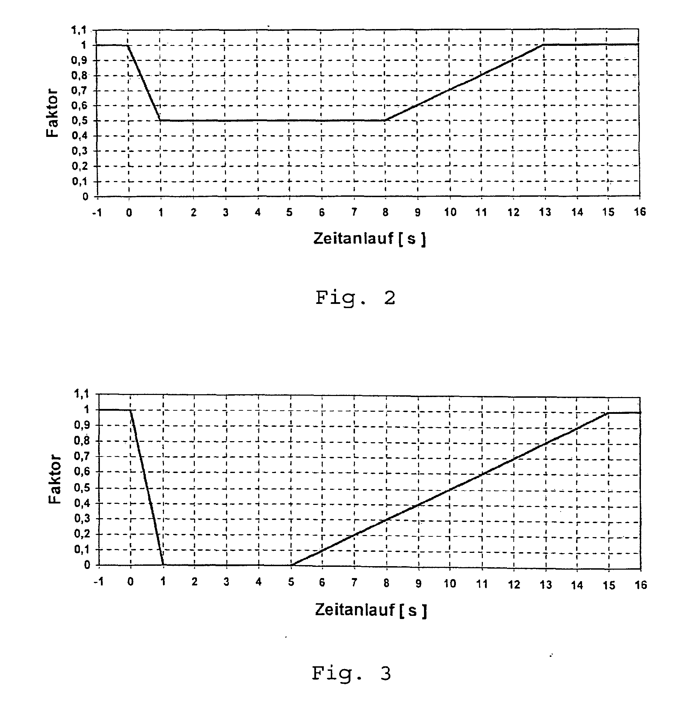

Ist das Signal Kompaus gesetzt, so erfolgt eine Leistungsreduzierung des Klimakompressors in Abhängigkeit von der Aussentemperatur. Bei dieser Leistungsreduzierung ist der Kompressor vorzugsweise maximal 8 sec. lang abgeschaltet. Für die Ermittlung der Leistungsreduzierung können in einer Ansteuereinheit für den Kompressor entsprechende Modelle, Tabellen und/oder Kennlinien bzw. Kennfelder hinterlegt sein. Die Ansteuereinheit für den Klimakompressor kann sich in einem gesonderten Gerät befinden. Sie kann aber auch in ein Motorsteuergerät oder Fahrzeugsteuergerät integriert sein. Die Figuren 2 und 3 zeigen beispielhaft Kurvenverläufe entsprechender Kennlinien zur Leistungsreduktion. Auf der x-Achse ist die Zeit in Sekunden angegeben. Auf der y-Achse ist ein Faktor angegeben, mit welchem eine Sollleistung für den Kompressor vorzugsweise multipliziert wird, um eine reduzierte Sollleistung zu erhalten.

Die in der Fig. 2 dargestellte Kennlinie ist vorzugsweise bei einer Aussentemperatur von >= 25°C anzuwenden. Die in der Fig. 3 dargestellte Kennlinie ist vorzugsweise bei einer Aussentemperatur von weniger als 25°C anzuwenden. In beiden Kurven sinkt der Faktorwert für eine bestimmt Zeit auf einen Wert kleiner 1 um nach dieser bestimmten Zeit wieder auf den Wert 1 zu steigen. Bei dem in der Fig. 3 dargestellten Kurvenverlauf, nimmt der Faktor für eine Zeit von 7 sec. einen Wert von 0,5 an, d.h. die Kompressorleistung wird für diese Zeit auf 50% reduziert. Bei dem Kurvenverlauf in der Fig. 3, wird der Faktor für eine Zeit von 4 sec. auf 0 reduziert, d.h. der Klimakompressor wird für diese Zeit ausgeschaltet. Die dargestellten Zeiten der Leistungsreduzierung sind bevorzugterweise Maximalzeiten. Ist der Beschleunigungsvorgang bzw. die Zeit des Abwürgens vor Ablauf von 8 sec. (Fig. 2) bzw. 5 sec. (Fig. 3) abgeschlossen, dann kann eine Erhöhung der Kompressorleistung unmittelbar mit der in den Kennlinien angezeigten Steigung erfolgen. Bevor eine neue Abschaltung des Kompressors erfolgen kann, sollte der Kompressor vorzugsweise mindesten 20 sec. lang wieder eingeschaltet gewesen sein (Faktor = 1).

Fällt der Gaspedalwert GP unter den Schwellwert v14 und steigt die Motordrehzahl nMot vorzugsweise über den Schwellwert v12, so wird die Leistungsreduktion des Klimakompressors bevorzugterweise wieder zurückgenommen.

Mittels eines Funktionsblocks 15 wird eine fehlerhafte Klimaanlage bzw. ein fehlerhafter Klimakompressor festgestellt und durch Setzen eines Notaussignals KompNotaus der Klimakompressor ausgeschaltet. Die Abschaltung erfolgt vorzugsweise unmittelbar. Übersteigt die Kühlmitteltemperatur Tw einen Schwellwert v15 und liegt ein Lüfterfehler LF vor, so wird vorzugsweise das Notaussignal KompNotaus gesetzt. Wird kein Lüfterfehler LF erkannt, oder unterschreitet die Kühlmitteltemperatur einen Grenzwert v16, so wird der Klimakompressor vorzugsweise wieder eingeschaltet, bzw. nicht abgeschaltet. Durch dieses Erkennen eines Lüfterfehlers LF wird der Klimakompressor gegen eine Überbelastung geschützt.

In einem Funktionsblock 11 wird das Minimum aus den maximalen Kompressormomenten Mkompmax1 und Mkompmax2 gebildet. Dieses Minimum wird dann dem maximalen Kompressormoment Mkompmax zugewiesen, mit welchem wiederum der Klimakompressor und/oder eine diesem zugeordnete Ansteuereinheit angesteuert werden.

Ist ein Klimakompressor vorhanden, welcher entweder selbst oder über ein geeignetes Ansteuergerät eine maximale Momentenvorgabe Mkompmax verarbeiten kann, d.h. das Signal Kompsig ist gesetzt, so ist das Signal Kompaus redundant. Das Signal KompNotaus ist in diesem Fall ebenfalls für die Betriebszustände des Startens, des Beschleunigens/Anfahrens und bei einer bestehenden Gefahr des Motorabwürgens redundant. Diese beiden Signal Kompaus und KompNotaus können jedoch für andere Aggregateträger bzw. andere Lasten verwendet werden. D.h. mittels dieser Signale können weitere Lasten des Verbrennungsmotors wie beispielsweise ein Generator abgeschaltet werden, um eine Leistungsreduzierung beim Starten, Beschleunigen/Anfahren und/oder bei einer Gefahr des Abwürgens zu bewirken.

Das erfindungsgemäße Verfahren ist vorzugsweise softwaretechnisch in einem Motorsteuergerät oder in einem Fahrzeugsteuergerät integriert.

## Patentansprüche

1. Verfahren zum Betreiben eines Klimakompressors eines Kühlmittelkreislaufs in einem von einem Verbrennungsmotor angetriebenen Kraftfahrzeug, wobei ein maximales Moment (Mkompmax) für den Klimakompressor ermittelt wird,
**dadurch gekennzeichnet,**
**dass** für die Ermittlung des maximalen Moments ein Istmoment (Mmotist) des Verbrennungsmotors mit einem Grenzmoment des Verbrennungsmotors unter Bildung einer Vergleichsgröße verglichen wird, und das maximale Moment (Mkompmax) für den Klimakompressor in Abhängigkeit von der Vergleichsgröße bestimmt wird.

2. Verfahren nach Anspruch 2
**dadurch gekennzeichnet,**
**dass** ein Istmoment des Klimakompressors für eine vorgegebene Zeit das maximale Moment (Mkompmax) nicht überschreitet.

3. Verfahren nach Anspruch 1
**dadurch gekennzeichnet,**
**dass** das maximale Moment (Mkompmax) für den Klimakompressor gefiltert wird.

4. Verfahren nach Anspruch 1,
**dadurch gekennzeichnet,**
**dass** bei einem Beschleunigungs-/Anfahrvorgang (13) ein Istmoment des Klimakompressors das maximale Moment (Mkompmax) des Klimakompressors nicht überschreitet, wenn ein Gaspedalwert (GP) einen vorgegebenen Grenzwert (v13) überschreitet.

5. Verfahren nach Anspruch 1,
**dadurch gekennzeichnet,**
**dass** ein Istmoment des Klimakompressors das maximale Moment (Mkompmax) des Klimakompressors nicht überschreitet, wenn ein Leerlaufmoment (MLL) des Verbrennungsmotors einen vorgegebenen Grenzwert (v3, v8) überschreitet.

6. Verfahren nach Anspruch 4 oder 5,
**dadurch gekennzeichnet, dass** ein Istmoment des Klimakompressors das maximale Moment (Mkompmax) des Klimakompressors nicht überschreitet, wenn zusätzlich eine Drehzahl (nMot) des Verbrennungsmotors einen vorgegebenen Grenzwert (v5) unterschreitet.

7. Verfahren nach Anspruch 6,
**dadurch gekennzeichnet,**
**dass** der vorgegebene Grenzwert (v3, v8) von einem maximal möglichen Istmoment des Verbrennungsmotors abhängig ist.

8. Verfahren nach einem der Ansprüche 4 bis 7,
**dadurch gekennzeichnet,**
**dass** die Grenzwertvorgaben (v3, v5, v8, v13) hysteresebehaftet sind.
